# EUROPÄISCHE PATENTSCHRIFT

(11) **EP 0 645 420 B1**
(45) Veröffentlichungstag und Bekanntmachung des Hinweises auf die Patenterteilung: **02.12.1998**
(21) Anmeldenummer: 94114421.4
(22) Anmeldetag: 14.09.1994
(51) Int. Cl.: C08J 9/28, C08F 265/04, C08F 265/06, C08J 9/14

(54) **Polymethacrylat-Formkörper aus gehärteten Giessharzen mit besonderer Mikrodomänenstruktur**
Polymethacrylate moulding based on cured casting resin, with structure of particular microdomains
Pièces en polyméthacrylate à base de résines à couler durcies, présentant une structure particulière à microdomaines

(30) Priorität: 21.09.1993 DE 4332013
(43) Veröffentlichungstag der Anmeldung: 29.03.1995
(73) Patentinhaber: Röhm GmbH, 64293 Darmstadt (DE)
(72) Erfinder: Meyer, Armin, D-64297 Darmstadt (DE); Fischer, Udo, Dr.-Ing., D-64297 Darmstadt (DE)

(56) Entgegenhaltungen:
- EP-A- 0 503 156
- EP-A- 0 505 128
- FR-A- 2 072 664
- GB-A- 987 751

## Beschreibung

### Gebiet der Erfindung

Die Erfindung betrifft gehärtete Polymethacrylat-Gießharze und daraus hergestellte Formteile hergestellt durch Polymerisation von Methacrylat-Monomeren in Gegenwart von Alkanen mit 5 bis 12 Kohlenstoffatomen. Die solchermaßen hergestellten Polymethacrylat-Formkörper weisen eine Mikroporenstruktur auf, die einen hohen Reflexionsgrad und einen niedrigen Transmissionsgrad bei Formteilen gewährleistet.

### Stand der Technik

Die Substanzpolymerisation von Methacrylat-Monomeren in Gegenwart von Lösungsmitteln ist seit langem bekannt. Dabei dienen die Lösungsmittel beispielsweise zur Steuerung der Viskosität des Reaktionsgemischs, zur Vorlösung von festen Zuschlagstoffen, wie zum Beispiel Polymerisationsinitiatoren oder Molekulargewichtsreglern, sowie zur Abfuhr der Wärme aus dem Reaktionsgemisch.
Weiterhin ist bekannt, daß aus polymeren Werkstoffen Schaumstoffe durch die Zugabe von sogenannten Treibmitteln bei der thermoplastischen Verarbeitung der polymeren Werkstoffe hergestellt werden können. Solche Treibmittel sind zum Beispiel leicht flüchtige Substanzen, wie beispielsweise Fluorchlorkohlenwasserstoffe, Alkane, Inertgase, wie Stickstoff oder Kohlendioxid, oder Wasser, das entweder direkt eingespeist wird oder in Form von Hydratsalzen zugefügt wird, die das Wasser beim Erhitzen freisetzen. EP-A 493 783 beschreibt beispielsweise Polycarbonat-Schaumstoffe, die aus einer Mischung eines thermoplastischen Polycarbonat-Kunststoffes, eines porenbildenden Zusatzes und eines Hydrats eines anorganischen Salzes durch Erhitzen über die Erweichungstemperatur des Kunststoffes hergestellt werden.

In EP-A 417 405 wird ein Direktbegasungsverfahren zum Aufschäumen von Polystyrol beschrieben, wobei in einem ersten Extruder oder einer ersten Extrusionszone Polystyrol aufgeschmolzen wird und die Schmelze unter hohem Druck mit einem Treibmittel vermischt wird. Bei der Entspannung der Schmelze an der Extrusionsdüse schäumt das Material auf und erstarrt zu einem Schaumstoff. Als Treibmittel werden vorzugsweise Alkanole oder Stickstoff eingesetzt.
DE-PS 10 17 784 umfaßt ein Verfahren zur Herstellung poröser, überwiegend aus Polymethylmethacrylat (PMMA) bestehenden Formkörpern, wobei dem aus Polymerisat und Monomeren bestehenden Gemisch wenigstens zur teilweisen Erreichung der vorgeschriebenen tiefen Temperatur und gleichzeitig zur Erzielung einer porigen Struktur des bei der Polymerisation entstehenden Gebildes festes Kohlendioxid zugefügt wird.
Weitere Schutzrechte betreffen geschäumte Polymethacrylat-Kunststoffe, bei denen das Treibgas durch Einwirkung einer wasserhaltigen Polymerkomponente auf eine Calciumcarbid-haltige Polymethacrylatkomponente erzeugt wird (SA-Patent 68 08 312) oder Polymethacrylat-Kunststoffe, die mittels peroxidischer Verbindung geschäumt werden (Japan. Kokai 78,105 565,e, Chem. Abstr. 90, 39622a; Japan Kokai 75,151 278, Chem. Abstr. 84, 151 530h). FR-A-2 072 664 umfaßt ein Verfahren zur Herstellung poröser Polymeren.

Aus der EP-A 503 156 ist bekannt, zur Herstellung von Gießharzen in eine gefüllte Suspension von Methylmethacrylat bis zu 50 Gew.-% Wasser zu emulgieren. Nach der Härtung wird der Wasseranteil durch Erhitzen aus dem Gießling ausgetrieben, wonach ein schaumartiges, hochgefülltes Material hinterbleibt.
J.R. Elliot et al. beschreiben die Polymerisation von Methylmethacrylat in Gegenwart von Gemischen aus Lösungsmitteln, wie beispielsweise Toluol und Methylisobutylketon, und aus Nichtlösungsmitteln, wie beispielsweise n-Butanol, Methanol und n-Heptan (Polym. Commun. 32(1), Seiten 10 bis 12, 1991).
Grobporige Schäume niedriger Dicke werden durch Vakuumtrocknung erzeugt, während feinporige Schäume durch überkritische Trocknung mit Kohlendioxid gewonnen werden können. Die Porengröße in solchermaßen hergestellten PMMA-Schäumen ist desweiteren vom Mischungsverhältnis Lösungsmittel/Nicht-Lösungsmittel abhängig.

### Aufgabe und Lösung

Bei lichtstreuenden Polymermaterialien ist es von hoher Bedeutung, daß neben einem guten Streuvermögen eine gleichmäßige Ausleuchtung von Formteilen aus den lichtstreuenden Polymermaterialien vorliegt. Weiterhin ist wichtig, daß das Polymermaterial möglichst wenig Licht absorbiert, eine Eigenschaft, bei der sich PMMA auszeichnet. An den Grenzflächen zwischen Kunststoff und Gasinklusionen wird das einfallende Licht fast vollständig reflektiert und gelangt durch Mehrfachreflexion an beliebige Stellen im Kunststoff-Formteil, bevor es wieder austritt. Besonders hohe Reflexionsgrade und damit kleine Transmissionsgrade erhält man durch eine Mikroporenstruktur, die mit den im Stand der Technik zitierten technischen Schäumverfahren nicht realisiert werden kann. Das von J.R. Elliot et al. beschriebene Verfahren zur Herstellung einer Mikrozellularstruktur in PMMA ist komplex und technisch aufwendig. Zudem sind die von Elliot et al. realisierten Porendurchmesser für eine effiziente und gleichmäßige Ausleuchtung von Formteilen aus PMMA mit o.g. Mikrozellularstruktur immer noch zu groß.

Die daraus resultierende Aufgabe zur Bereitstellung eines geschäumten Gießharzes mit hoher Transmission von Licht und einem hohen Anteil an Mehrfachreflexion von Licht in Formteilen aus gehärtetem Gießharz wird durch das erfindungsgemäße Verfahren in einfacher und hervorragender Weise gelöst. Verfahrensmerkmale sind folgende: Eine Vorlösung VL aus 80 bis 100 Gew.-Teilen Methacrylat-Monomeren und 0 bis 20 Gew.-Teilen Polymethacrylat-Praepolymerisat PP wird mit 0 bis 1 Gew-Teilen, gegebenenfalls 0,05 bis 0,5 Gew.-Teilen, eines monomeren Vernetzers VM, 0,01 bis 1 Gew.-Teilen, gegebenenfalls 0,05 bis 0,5 Gew.-Teilen eines Dehydratisierungsmittels DM, 0,05 bis 1,5 Gew.-Teilen, gegebenenfalls 0,1 bis 1 Gew.-Teilen, einer radikalisch polymerisierbaren Carbonsäure MC, wie beispielsweise Acryl- oder Methacrylsäure, 5 bis 15 Gew.-Teilen, vorzugsweise 6 bis 12 Gew.-Teilen eines vorzugsweise unverzweigten Alkans mit 5 bis 12 Kohlenstoffatomen als Treibmittel TrM, sowie vorzugsweise 10⁻³ bis 10⁻¹ Gew.-Teilen, besonders vorzugsweise 2 x 10⁻³ bis 2 x 10⁻² Gew.-Teilen eines Trennmittels TM vermischt.

Dieser Vorlösung VL werden an sich übliche Polymerisationsinitiatoren zugesetzt, die Mischung in eine Polymerisationskammer gefüllt und vorzugsweise im Wasserbad und/oder im Luftschrank polymerisiert. Die resultierenden Polymerisatscheiben weisen vorzugsweise Dicken zwischen 3 und 30 mm auf. Das Polymerisat ist abhängig von der Dicke durchscheinend bis gedeckt weiß und weist Mikroporen in der Größe zwischen 10 nm und 1 µm je nach Polymerisationsbedingungen auf. Die Größenverteilung der Mikroporen ist eng.
Die erfindungsgemäß hergestellten Polymerisatscheiben zeigen bei punkt- oder linienförmiger Hinterleuchtung eine ausgezeichnete gleichmäßige Ausleuchtung, die den Bau von extrem flachen Beleuchtungskörpern erlaubt, ohne daß die Lichtquelle punktuell durchscheint.
Beim Heiß-Umformen mit Formwerkzeugen kann die Transparenz des Formteils über die Temperatur des Negativ-Formwerkzeugs gesteuert werden. Kalte Formen führen zu hoher Transparenz, während warme Werkzeuge zu einem hohen Weißgrad führen.

### Durchführung der Erfindung

### Die Gießharz-Komponenten

Als Praepolymerisate PP kommen Polymethacrylate, vorzugsweise PMMA infrage, die gegebenenfalls untergeordnete Anteile, bis 20 Gew.-% an zweckmäßig ausgewählten Comonomeren, wie beispielsweise Methylacrylat oder Styrol, enthalten können. Die Praepolymerisate haben im allgemeinen ein mittleres Molekulargewicht M_{w} zwischen 10⁴ und 10⁷
Dalton, vorzugsweise zwischen 10⁵ und 5 x 10⁶ Dalton (M_{w} = Gewichtsmittel, bestimmt per Gelpermeationschromatographie GPC; vgl. hierzu H.F. Mark et al. Encyclopedia of Polymer Science and Technology, Vol. 10, Seiten 1 bis 19, J. Wiley, New York, 1987). Als polymerisierbare Bestandteile der Gießharz-Zusammensetzungen werden Derivate M der Acryl- und der Methacrylsäure eingesetzt, die die Praepolymerisate PP enthalten und die vorzugsweise unter Bildung eines bei Raumtemperatur festen Polymerisats polymerisiert werden können. Die Gemische aus den Monomeren M und den
Praepolymerisaten PP weisen im allgemeinen eine Viskosität von weniger als 5 Pa · s, vorzugsweise von weniger als 0,5 Pa · s bei der Temperatur auf, mit der die Gemische in die Polymerisationskammer gefüllt werden.
Bevorzugt werden Monomere M der Formel I eingesetzt: 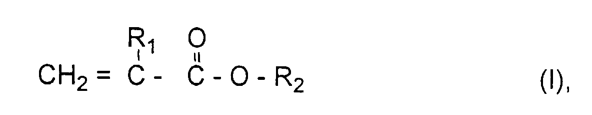 worin
- R₁: für Wasserstoff oder Methyl, sowie
- R₂: für einen gegebenenfalls verzweigten und gegebenenfalls substituierten Alkylrest mit 1 bis 18 Kohlenstoffatomen, der für einen gegebenenfalls substituierten Cycloalkylrest mit 5 bis 12 Ringkohlenstoffatomen, oder für einen gegebenenfalls substituierten Arylrest mit 6 bis 10 Ringkohlenstoffatomen
stehen können.

An sich bekannte Substituenten sind beispielsweise Halogen-, Hydroxy-, Alkoxygruppen sowie Dialkylaminogruppen mit C1- bis C12-Alkylresten, vorzugsweise mit C1- bis C6-Alkylresten. Insbesondere seien als Monomere M Verbindungen der Formel I genannt, worin R₂ für Estersubstitutenten mit 1 bis 8 Kohlenstoffatomen sowie R₁ für Methyl steht, wie beispielsweise Ethylmethacrylat, Propylmethacrylat, lsopropylmethacrylat, n-Butylmethacrylat, tert.-Butylmethacrylat, 2-Ethylhexylmethacrylat, Cyclohexylmethacrylat, Phenylmethacrylat, Benzylmethacrylat sowie besonders bevorzugt Methylmethacrylat.

Ferner können die Polymervorstufen noch an sich bekannte vernetzende Monomeren VM enthalten, deren Gehalte im allgemeinen zwischen 0,01 und 1 Gew.-Teilen, vorzugsweise zwischen 0,05 bis 0,5 Gew.-Teilen, bezogen auf die flüssigen Polymervorstufen, liegen. Solche vernetzenden Monomere VM sind beispielsweise Verbindungen mit mindestens zwei polymerisationsfähigen Vinylgruppen im Molekül (vgl. hierzu z. B. H. Rauch-Puntigam, Th. Völker, "Acryl- und Methacrylverbindungen, Seite 184, Springer Verlag, Heidelberg 1967), wobei exemplarisch Ethylenglykoldi(meth)acrylat, 1,4-Butandioldi(meth)acrylat, Triglykoldi(meth)acrylat, Trimethylolpropyltri(meth)acrylat sowie Allylverbindungen, wie (Meth)allyl(meth)acrylat oder Triallylcyanurat, genannt seien. Desweiteren enthalten die Polymervorstufen 0,05 bis 1,5 Gew.-Teile, vorzugsweise 0,1 bis 1 Gew.-Teile bezogen auf das Gießharz einer radikalisch polymerisierbaren Carbonsäure MC, wie beispielsweise Maleinsäure, ltaconsäure, Acrylsäure oder besonders bevorzugt Methacrylsäure.

Im allgemeinen enthalten die Polymervorstufen einen Gehalt von über 50 Gew.-%, speziell von 80 bis 100 Gew.-% an (Meth)acrylsäureestern gemäß Formel I, an radikalisch polymerisierbarer Carbonsäure MC und an vernetzenden Monomeren VM. Weiterhin können als Comonomere mit den (Meth)acrylsäureestern der Formel I copolymerisierbare Monomere verwendet werden, wie beispielsweise Vinylaromaten, wie Styrol, -Methylstyrol, ringsubstituierte Styrole oder Divinylbenzol, heterocycliche Verbindungen, wie Vinylpyrrolidon oder Vinylpyridin, Vinylester wie Vinylacetat oder Vinylpropionat, sowie Vinylhalogenide, wie Vinylchlorid oder Vinylidenchlorid.

Vorzugsweise enthält die flüssige, organische, polymerisierbare Vorstufe Praepolymerisate PP, die im allgemeinen aus denselben Monomeren M wie die polymerisierbare Vorstufe aufgebaut sind, wobei die Praepolymerisate PP jedoch keine funktionalisierten Monomeren enthalten. Im allgemeinen gelten die gleichen Proportionen wie für die Monomeren M angegeben. Vorzugsweise sind die Praepolymerisate PP in den Monomeren M gelöst, sie können aber auch darin dispergiert sein. Der Anteil der Praepolymerisate PP an den flüssigen
Polymervorstufen liegt im Bereich zwischen 0 und 20 Gew.-%, vorzugsweise zwischen 1 und 15 Gew.-% bezogen auf die Gießharz-Formulierung. Beispielsweise kann das Praepolymerisat PP ein Copolymerisat aus Methylmethacrylat und Methylacrylat im
Gewichtsver-hältnis 9 : 1 mit einem mittleren Molekulargewicht M_{w} von etwa 2 x 10⁶ Dalton sein.
Weiterhin enthalten die erfindungsgemäßen Gießharze an sich bekannte Polymerisationsinitiatoren in Mengen von 0,05 bis 5 Gew-%, vorzugsweise von 0,1 bis 2 Gew.-% bezogen auf die Monomeren im Gießharz. Als Polymerisationsinitiatoren werden im allgemeinen Radikalbildner eingesetzt, deren Zerfall photolytisch, thermisch oder durch Redox-Prozesse induziert werden kann. Grundsätzlich sind alle diejenigen geeignet, die bereits bei tiefen Temperaturen einen hohen Radikalstrom liefern (vgl. z. B. J.H. Brandrup, E.H. Immergut, "Polymer Handbook", 3rd. Ed., Kapitel III, Seiten 1 bis 65, J. Wiley, New York, 1989). Beispielsweise können als Polymerisationsinitiatoren verwendet werden:
Peroxide wie tert.-Butylperoctoat, Dibenzoylperoxid,
Dicyclohexylperoxid, Cumolhydroperoxid oder bevorzugt tert.-Butylperisononanoat sowie tert.-Butylperpivalat, Halbester der Permaleinsäure, wie beispielsweise tert.-Butylpermaleinat, in Verbindung mit alkalisch reagierenden Metallsalzen (vgl. auch DE-AS 20 32 646), sowie Azoverbindungen, wie 4,4'-Azobis-(2,4-dimethylvaleronitril) oder bevorzugt 2,2'-Azobis(isobutyronitril). Zweckmäßigerweise erfolgt der Zusatz der Polymerisationsinitiatoren erst kurz vor dem Aushärteprozeß der Gießharze.

Desweiteren enthalten die Gießharze innere Trennmittel TM in Mengen bis zu 1 Gew.-% bezogen auf die Gießharz-Formulierung, bevorzugt in Mengen zwischen 10⁻³ und 10⁻¹ Gew-%, besonders bevorzugt in Mengen zwischen 2 x 10⁻³ und 2 x 10⁻² Gew.-%, welche das Anhaften des gehärteten Gießharzes an der Wandung der
Polymerisationskammer verhindern und damit zusätzlich für eine gute Oberflächenbeschaffenheit der gehärteten Gießharz-Formteile sorgen. Beispiele für innere Trennmittel TM sind Alkylphosphate, deren neutralisierte Derivate sowie bevorzugt Alkali- und Erdalkalisalze von Fettsäuren.

Darüber hinaus können die Gießharze in Anteilen von 0,1 bis zu 20 Gew.-%, bevorzugt von 0,5 bis zu 10 Gew.-% bezogen auf die Gießharz-Formulierung anorganische Füllstoffe und/oder Pigmente sowie Farbstoffe enthalten. Als Füllstoffe geeignet sind die einschlägig für Gießharze verwendeten anorganischen Materialien, wie beispielsweise Aluminiumoxide, Alkali- und/oder Erdalkalioxide, Siliciumdioxid und/oder Titandioxid in verschiedenen Modifikationen, Tone, Silikate, Oxide, Kohle, Metalle oder Metallegierungen, synthetische Materialien wie Keramik, Glasmehl, Porzellan, Schlacke oder feinverteiltes Siliciumdioxid, Quarze, Kaolin, Talkum, Glimmer, Feldspat, Apatit, Baryte, Gips, Kreide, Kalkstein, Dolomit oder Gemische aus den vor- und nachstehend genannten Komponenten. Um farbige Formteile herstellen zu können, kann man dem Gießharz noch Pigmente und/oder Farbstoffe zusetzen. Als Beispiele seien Eisenoxid, Titandioxid, Zinkweiß, Ultramarinblau, Ruß oder organische Farbpigmente genannt. Pigmente können auch als vorgebildete Dispersion in das Gießharz mit Hilfe geeigneter Pigment-Dispergiermittel eingebracht werden. Wichtiger Bestandteil der erfindungsgemäßen Gießharze sind im Gießharz gut lösliche Dehydratisierungsmittel DM, die das Restwasser aus der Gießharzmischung sowie eventuell in die Polymerisations-kammer eingedrungenes Wasser entfernen. Beispiele für Dehydratisierungsmittel DM, die in Mengen von 0,01 bis 1 Gew.-Teilen, vorzugsweise 0,05 bis 0,5 Gew.-Teilen bezogen auf das Gießharz anwesend sind, sind Zeolithe, anorganische Salze, die Hydratwasser anlagern oder bevorzugt organische Verbindungen, wie beispielsweise Glykole (vgl. hierzu Kirk-Othmer, Encyclopedia of Chemical Technology, 3rd. Ed. Vol. 11, Seiten 946 ff, J. Wiley, New York, 1980). Besonders bevorzugt sind Verbindungen, die mit Wasser reagieren, wobei sowohl die Edukte als auch die Reaktionsprodukte mit dem Gießharz voll verträglich sind, wie beispielsweise Pyrokohlensäuredimethylester oder Trimethoxyethan.

Unerläßlicher Bestandteil der erfindungsgemäßen Gießharze sind die Trübungsmittel TrM, die beim Härten (= Polymerisieren) der Gießharze die Mikroporen bilden. Als Trübungsmittel TrM für die erfindungsgemäßen gehärteten Gießharze werden 5 bis 15 Gew.-%, vorzugsweise 6 bis 12 Gew.-%, bezogen auf das Gießharz an Alkanen mit 5 bis 12 Kohlenstoffatomen, bevorzugt n-Alkane mit 5 bis 12 Kohlenstoffatomen, besonders bevorzugt n-Hexan, n-Heptan, n-Octan, n-Nonan und/oder n-Decan eingesetzt. Beim Härten der Gießharze bilden sich durch das Trübungsmittel TrM bedingt Mikroporen in dem Gießharz-Polymerisat, deren Durchmesser zwischen 10 nm und 2 µm, vorzugsweise zwischen 50 nm und 1 µm liegen.

### Das Härten (= Polymerisieren) der Gießharze

Das Polymerisationsverfahren zur Herstellung der gehärteten Gießharze kann in Anlehnung an an sich bekannte technische Vorgehensweisen erfolgen.
Das erfindungsgemäße Verfahren umfaßt zunächst die Herstellung der Vorlösung VL, bestehend aus Methacrylat-Monomeren,
Polymethacrylat-Praepolymerisat PP, radikalisch polymerisierbarer Carbonsäure MC, Trübungsmittel TrM,
Polymerisationsinitiator, sowie gegebenenfalls Vernetzer VM, Dehyratisierungsmittel DM, Füllstoffe und/oder Pigmente sowie innere Trennmittel TM, in an sich bekannter Weise (vgl. H. Rauch-Puntigam, Th. Völker, "Acryl- und Methacrylverbindungen", Springer-Verlag, Heidelberg 1967). Die Vorlösung VL wird in einer Polymerisationskammer üblicher Bauart, bevorzugt zwischen Scheiben aus Silikatglas, die beispielsweise mit einer Profilschnur druckbeständig abgedichtet werden, im Wasserbad polymerisiert. Beispielsweise betragen die Polymerisationszeiten zwischen 24 und 60 Stunden bei Wasserbadtemperaturen zwischen 35 und 55 °C. Nach Abschluß der Polymerisation im Wasserbad werden die gehärteten Polymerisatplatten zwischen 4 und 12 Stunden bei Temperaturen zwischen 80 und 120 °C im Luftschrank zur Endpolymerisation getempert. Solchermaßen können Platten von 3 bis 30 mm Dicke in fast beliebigen Flächenformaten hergestellt werden. Einschränkende Parameter für das Flächenformat sind die baustatischen Eigenschaften der gehärteten Gießharz-Platten.
Die Oberfläche der gehärteten Gießharz-Platte ist optisch einwandfrei, was eine weitgehende Abwesenheit von Ablöse- oder Haftpunkten zwischen Polymerisatkammerwand und Gießharz-Platte bedeutet.

### Eigenschaften der erfindungsgemäßen Gießharz-Polymerisate

Die gehärteten Gießharz-Formteile weisen eine Mikroporen der schon beschriebenen Größe auf. Durch Tempern der Gießharz-Formteile bei Temperaturen zwischen 130 und 160 °C werden die ursprünglich weiß erscheinenden Formteile transparent, wobei dieser Prozeß bei langsamer Abkühlung reversibel ist. Bei schneller Abkühlung der Formteile wird die Transparenz eingefroren. Dieser Effekt kann auch in Umformwerkzeugen durch die Steuerung der Temperatur der Preßform erzielt werden. Damit wird die Herstellung von Gießharz-Formteilen möglich, die gleichzeitig weiß erscheinende und transparente Bereiche aufweisen. Darüber hinaus ist mit den erfindungsgemäßen gehärteten Gießharzen eine thermooptische Steuerung bei Prozessen möglich, die transparente Materialien bei höheren Temperaturen erfordern.

Von herausragender Bedeutung ist das Lichtstreuverhalten der erfindungsgemäßen Gießharze, die einen sehr hohen Reflexionsgrad und einen sehr geringen Transmissionsgrad für Weißlicht aufweisen. Infolge der Mikroporenstruktur tritt ein nahezu ideales Streuverhalten auf. Damit wird es beispielsweise möglich, eine von der
Beleuchtungsindustrie schon lange geforderte Bedingung zu erfüllen: Die Herstellung von Beleuchtungskörpern in Form sehr flacher, großflächiger Quader, die mit an einer Kante der Quader angeordneten Lichtquellen gleichmäßig ausgeleuchtet werden können. Färbt man das Gießharz mit löslichen Farbpigmenten ein, so lassen sich farbige Beleuchtungskörper mit denselben Eigenschaften herstellen. Verwendet man als Trübungsmittel TrM n-Alkane mit 5 bis 9 Kohlenstoffatomen, kommt es bei den gehärteten geschäumten Gießharzen zu einer Intensivierung der Weißfärbung, wenn man die Gießharz-Formteile auf Temperaturen unter 0 °C bevorzugt unter -40 °C abkühlt. Wie der oben genannte Temperprozeß ist auch dieser Prozeß reversibel, d.h. beim Erwärmen auf Temperaturen über 100 °C und anschließendem Abkühlen auf Raumtemperatur wird der ursprüngliche Weißgrad wieder erhalten. Herausragende mechanische Eigenschaften der erfindungsgemäßen gehärteten Gießharze ist die im Vergleich zu konventionellen Gießharzen vergleichbarer chemischer Zusammensetzung um Faktoren höhere Schlagzähigkeit. Damit gehen vergleichsweise geringe Einbußen bei der Zugfestigkeit und beim Elastizitäts-Modul einher.

Die folgenden Beispiele sollen die Erfindung veranschaulichen.

### BEISPIELE

### Beispiel 1

### Herstellung des Gießharzes

36,3 Gew.-% einer Mischung aus 12 Gew.-Teilen Polymethylmethacrylat mit einem mittleren Molekulargewicht M_{w} = 4,76 x 10⁶ Dalton und 88 Gew.-Teilen Methylmethacrylat werden mit 54,4 Gew.-% Methylmethacrylat unter Rühren vermischt.
Danach werden ebenfalls unter Rühren in folgender Reihenfolge eingemischt: 0,1 Gew-% Azobisisobutyronitril, 1 Gew.-% Methacrylsäure, 8 Gew.-% n-Heptan, 0,2 Gew.-% Pyrokohlensäuredimethylester sowie 5 x 10⁻³ Gew.-% Stearinsäure als Trennmittel.
Es resultiert ein gut verarbeitbarer Gießharz-Sirup.

### Beispiel 2

### Polymerisation des Gießharzes

Der gemäß Beispiel 1 hergestellte Gießharz-Sirup wird in eine Polymerisationskammer aus Silikatglas mit einer umlaufenden Dichtschnur und mit den Maßen 600 x 600 x 3,2 mm gefüllt und 24 Stunden im Wasserbad bei 45 °C polymerisiert. Während der
Polymerisation bildet sich parallel zur Härtung des Gießharzes die erfindungsgemäße Mikroporenstruktur, die Durchmesser zwischen 50 und 500 nm aufweisen. Nach der Wasserbadpolymerisation werden die polymerisierten Gießharzplatten noch 6 Stunden bei 90 °C zur Endpolymerisation im Luftschrank getempert.

### Beispiel 3

### Mechanische und optische Eigenschaften der nach Beispiel 2 hergestellten Gießharz-Platten

Im folgenden werden mechanische und optische Eigenschaften der erfindungsgemäßen Gießharze denjenigen von Gießharzen gleicher Polymerzusammensetzung gegenübergestellt:
a) mechanische Eigenschaften:

| | Platte aus Gießharz nach Beispiel 2 | Plexiglas® GS 233 |
|---|---|---|
| Schlagzähigkeit (KJm⁻²) nach ISO 279 / ID | 25 | 15 |
| Zugfestigkeit (MPa) nach DIN 53 455 | 47 | 80 |
| Elastizitätsmodul (MPa) nach DIN 53 457 | 2500 | 3300 |
| Reißdehnung (%) nach DIN 53 455 | 4,2 - 6,6 | 5,5 |

b) optische Eigenschaften

| | Platte aus Gießharz nach Beispiel 2 | Plexiglas® GS 233 |
|---|---|---|
| Transmission T_{D65} (%) nach DIN 5036 | 10,7 | 92 |
| Streuvermögen nach DIN 5036 | > 0,9 | 0 |

c) sonstige Eigenschaften

| | Platte aus Gießharz nach Beispiel 2 | Plexiglas® GS 233 |
|---|---|---|
| Dichte (Kg m⁻³) nach DIN 53 479 | 1150 | 1190 |

### Beispiel 4

Änderung der Transparenz einer nach Beispiel 2 hergestellten Gießharz-Platte

Die ursprüngliche Lichttransmission I von 10,7 % wird durch 10-minütiges Erwärmen auf 170 °C in einem Preßwerkzeug bei einem Preßdruck von 50 kp auf 72,8 % erhöht.

## Patentansprüche

1. Gießharzformulierung, die im gehärteten Zustand eine Mikroporenstruktur aufweist, aus Methacrylat-Monomeren,
dadurch gekennzeichnet, daß zur Bildung der Mikroporen während der Polymerisation Alkane mit 5 bis 12 Kohlenstoffatomen in Anteilen von 5 bis 15 Gew.-% bezogen auf die Gießharzformulierung verwendet werden und daß die im gehärteten Gießharz vorhandene Mikroporenstruktur aus Mikroporen aufgebaut ist, die Durchmesser zwischen 10 nm und 2 µm aufweisen.

2. Gießharzformulierung gemäß Anspruch 1, dadurch gekennzeichnet, daß die Gießharz-Formulierung neben den Methacrylat-Monomeren noch Anteile von 0,1 bis 20 Gew-% Polymethacrylat-Praepolymerisat PP enthält.

3. Gießharzformulierung gemäß den Ansprüchen 1 und 2, dadurch gekennzeichnet, daß 0,05 bis 1,5 Gew.-% bezogen auf die Gießharzformulierung einer radikalisch polymerisierbaren Carbonsäure MC neben den Methacrylat-Monomeren anwesend sind.

4. Gießharzformulierung gemäß den Ansprüchen 1 bis 3, dadurch gekennzeichnet, daß 0,01 bis 1 Gew.-% bezogen auf die Gießharzformulierung eines Dehydratisierungsmittels DM anwesend sind.

5. Gießharzformulierung gemäß den Ansprüchen 1 bis 4, dadurch gekennzeichnet, daß 0,01 bis 1 Gew.-% bezogen auf die Gießharzformulierung eines monomeren Vernetzers VM neben den anderen Monomeren anwesend sind.

6. Gießharzformulierung gemäß den Ansprüchen 1 bis 5, dadurch gekennzeichnet, daß 10-3 bis 1 Gew.-% bezogen auf die Gießharzformulierung an Formtrennmittel TM anwesend sind.

7. Gießharzformulierung gemäß den Ansprüchen 1 bis 6, dadurch gekennzeichnet, daß 0,01 bis 10 Gew.-% bezogen auf die Gießharzformulierung an löslichen Farbpigmenten anwesend sind.

8. Gießharzformulierung gemäß den Ansprüchen 1 bis 7, dadurch gekennzeichnet, daß die Lichtstreuintensität an Formteilen aus dem gehärteten Gießharz durch Änderung der Formteiltemperatur gesteuert werden kann.

9. Verwendung gehärteter Gießharzformulierungen gemäß den Ansprüchen 1 bis 8 zum Bau von Leuchtkörpern, die mit einer an einer Kante der Leuchtkörper angeordneten Lichtquelle gleichmäßig ausgeleuchtet werden können.

## Claims

1. A casting resin formulation comprising methacrylate monomers which has a micropore structure in its hardened stare,
characterised in that alkanes with 5 to 12 carbon atoms are used in a proportion of 5 to 15 percent by weight, based on the casting resin formulation, to form the micropores and that the micropore structure in the hardened casting resin comprises micropores which have a diameter of between 10 nm and 2 µm.

2. A casting resin formulation according to claim 1, characterised in that in addition to the methacrylate monomers, the casting resin formulation also contains from 0.1 to 20 percent by weight of polymethacrylate prepolymerisate PP.

3. A casting resin formulation according to claims 1 and 2, characterised in that 0.05 to 1.5 percent by weight, based on the casting resin formulation, of a radically-polymerisable carboxylic acid are present in addition to the methacrylate monomers.

4. A casting resin formulation according to claims 1 to 3, characterised in that 0.01 to 1 percent by weight, based on the casting resin formulation, of a dehydrating agent DM are present.

5. A casting resin formulation according to claims 1 to 4, characterised in that in addition to the other monomers, 0.01 to 1 percent by weight, based on the casting resin formulation, of a monomeric crosslinker VM are present.

6. A casting resin formulation according to claims 1 to 5, characterised in that 10⁻³ to 1 percent by weight, based on the casting resin formulation, of a mould release agent TM are present.

7. A casting resin formulation according to claims 1 to 6, characterised in that 0.01 to 10 percent by weight, based on the casting resin formulation, of soluble colour pigments are present.

8. A casting resin formulation according to claims 1 to 7, characterised in that the light-scattering intensity of moulded parts made from the hardened resin can be controlled by alteration of the moulding part temperature.

9. A casting resin formulation according to claims 1 to 8 for the construction of illuminating bodies which can be uniformly illuminated by a light source disposed on one edge of the illuminating body.

## Revendications

1. Formulation de résine coulée qui comprend à l'état durci une structure de micropores et comporte des monomères de méthacrylate,
caractérisée en ce que
pour former des micropores pendant la polymérisation, on utilise des alcanes avec 5 à 12 atomes de carbone en proportion de 5 à 15 % en poids par rapport à la formulation de la résine coulée et en ce que la structure de micropores existant dans la résine coulée durcie est construite à partir de micropores, qui comportent un diamètre compris entre 10 nm et 2 µm.

2. Formulation de résine de coulée selon la revendication 1,
caractérisée en ce que
la formulation de résine coulée contient à côté des monomères de méthacrylate encore des proportions de 0,1 à 20 % en poids de prépolymère PP de polyméthacrylate.

3. Formulation de résine coulée selon les revendications 1 et 2,
caractérisée en ce que
0,05 à 1,5 % en poids par rapport à la formulation de résine coulée d'un acide carboxylique MC polymérisable radicalairement sont présents en plus des monomères de méthacrylate.

4. Formulation de résine coulée selon les revendications 1 à 3,
caractérisée en ce que
sont présents 0,01 à 1 % en poids par rapport à la formulation de résine coulée d'un agent déshydratant DM,

5. Formulation de résine de coulée selon les revendications 1 à 4,
caractérisée en ce qu'
est présent 0,01 à 1 % en poids par rapport à la formulation de la résine coulée d'un réticuleur monomère VM outre les autres monomères.

6. Formulation de résine de coulée selon les revendications 1 à 5,
caractérisée en ce que
10⁻³ à 1 % en poids par rapport à la formulation de résine coulée est présent comme agent de démoulage TM.

7. Formulation de résine coulée selon les revendications 1 à 6,
caractérisée en ce que
0,01 à 10 % en poids par rapport à la formulation de résine coulée est présent sous forme de pigments colorés solubles.

8. Formulation de résine de coulée selon les revendications 1 à 7,
caractérisée en ce que
l'intensité de dispersion de lumière sur des pièces moulées en résine coulée durcie peut être réglée par modification de la température des pièces moulées.

9. Utilisation de formulation de résine coulée durcies selon les revendications 1 à 8, pour la construction de luminaires, qui peuvent être éclairés de manière homogène par une source de lumière placée sur un bord du luminaire.
